# EUROPÄISCHE PATENTSCHRIFT

(11) **EP 2 989 945 B1**
(45) Veröffentlichungstag und Bekanntmachung des Hinweises auf die Patenterteilung: **30.01.2019**
(21) Anmeldenummer: 15182870.4
(22) Anmeldetag: 28.08.2015
(51) Int. Cl.: A47J 36/06

(54) **KÜCHENMASCHINE MIT EINEM AUFHEIZBAREN GEFÄSS**
KITCHEN APPLIANCE WITH A HEATABLE CONTAINER
ROBOT MENAGER DOTE D'UN RECIPIENT POUVANT ETRE CHAUFFE

(30) Priorität: 01.09.2014 DE 102014112577
(43) Veröffentlichungstag der Anmeldung: 02.03.2016
(73) Patentinhaber: Vorwerk & Co. Interholding GmbH, 42275 Wuppertal (DE)
(72) Erfinder: Arnold, Hans-Peter, 58566 Kierspe (DE)
(74) Vertreter: Müller, Enno

(56) Entgegenhaltungen:
- DE-A1-102009 047 733
- DE-U1-202008 012 826

## Beschreibung

Die Erfindung betrifft eine Küchenmaschine mit einem aufheizbaren Gefäß, wobei das Gefäß einen Deckel mit einem Deckelrand aufweist, an welchem Deckel mindestens ein Griffelement angeordnet ist, wobei im Bereich des Deckelrandes mindestens ein Dampfauslassweg vorgegeben ist, über welchen in dem Gefäß strömender Dampf in die Umgebung entweichen kann.

Küchenmaschinen der vorgenannten Art sind im Stand der Technik bekannt. Das aufheizbare Gefäß kann beispielsweise ein Dampfgargefäß sein, welches über einem Heizgefäß angeordnet ist, beispielsweise einem beheizten Rührgefäß, wobei das Heizgefäß eine zu dem Dampfgargefäß korrespondierende Abdeckung aufweist, an welcher das Dampfgargefäß so anordenbar ist, dass aus dem Heizgefäß aufsteigender Dampf durch an dem Dampfgargefäß ausgebildete Öffnungen in das Dampfgargefäß eintreten kann. Um einen kontrollierten Dampfaustritt aus dem Gefäß zu ermöglichen, ist es im Stand der Technik darüber hinaus bekannt, einen Dampfauslassweg vorzugeben, über welchen zumindest ein Teil des in dem Gefäß vorhandenen Dampfes in die Umgebung entweichen kann.

Die Druckschrift WO 2009/077335 A1 offenbart beispielsweise eine Küchenmaschine der vorgenannten Art, bei welcher dem Dampf im Bereich des Griffelementes ein Weg zwischen dem Griffelement und dem Deckelrand vorgegeben ist. Der Dampf tritt durch den vorgegebenen Weg zwischen dem Griffelement und dem Deckelrand aus. Dabei steigt der Dampf im Wesentlichen unmittelbar im Bereich des Deckelrandes senkrecht nach oben.

Aus der DE 20 2008 012 826 U1 ist ein Deckel mit Dampfentlüftungsfunktion bekannt, in welchem nahe dem Mittelbereich Durchgangsöffnungen für den Dampf ausgebildet sind. Der austretende Dampf wird nach radial außen abgeblasen. Aus der DE 10 2009 047 733 A1 ist ein Schnellkochtopf bekannt, bei welchem im Falle eines Überdruckes kurzzeitig Dampf abgegeben wird. Dem Dampf ist hierbei ein Weg innerhalb des Griffes vorgegeben.

Ausgehend von dem dargelegten Stand der Technik beschäftigt sich die Erfindung mit der Aufgabenstellung, eine Küchenmaschine mit einer günstigen Dampfführung im Bereich des Deckels anzugeben. Vorteilhaft soll die Dampfführung dazu geeignet sein, den Garprozess der in dem Gefäß zuzubereitenden Speisen zu optimieren und/oder die Handhabung des Gefäßes zu verbessern.

Diese Aufgabe ist beim Gegenstand des Anspruches 1 gelöst, wobei darauf abgestellt ist, dass der Dampfauslassweg von dem Deckelrand ausgehend, an einer Außenseite des Deckels entlang, im Wesentlichen in Richtung der Mitte des Deckels gerichtet ist, so dass aus dem Gefäß entweichender Dampf an der Außenseite des Deckels entlanggeführt wird, wobei der Dampfauslassweg zwischen der Außenseite des Deckels und einem Dampfauslassteil des Griffelementes ausgebildet ist, einerseits begrenzt durch das Griffteil und andererseits durch die Außenseite des Deckels, so dass die Außenseite unmittelbar mit der Temperatur des austretenden Dampfes beaufschlagt wird.

Dadurch, dass der Dampfauslassweg einerseits durch das Griffelement und andererseits durch die Außenseite des Deckels begrenzt ist, wird das Griffelement unmittelbar als Begrenzung des Dampfauslassweges verwendet, so dass dem Griffelement zum einen die Funktion eines Griffes zukommt und zum anderen die Funktion der Dampflenkung. Durch die jeweilige Ausgestaltung des Griffelementes kann die Größe und Form des Dampfauslassweges beeinflusst werden. Sofern es sich bei dem Griffelement beispielsweise um ein im Wesentlichen parallel zu der Außenseite des Deckels verlaufendes Plattenelement handelt, entsteht ein mehr oder weniger flach und breit ausgebildeter Dampfauslassweg. Durch die Größe und Form des Dampfauslassweges lässt sich insbesondere auch die Wärmeübertragung von dem durch den Dampfauslassweg strömenden Dampf auf die in dem Gefäß enthaltenen Speisen beeinflussen.

Insgesamt empfiehlt sich eine Ausgestaltung des Griffelementes, welche sowohl eine einfache Handhabung des Griffelementes ermöglicht, als auch in Verbindung mit dem Deckel einen Dampfauslassweg bereitstellt, welcher für eine Führung des Dampfes entlang der Außenseite des Deckels sorgt. Dabei sind zum einen Ausführungsformen denkbar, bei welchen das Griffelement im Wesentlichen U-förmig ausgebildet ist, so dass der Dampfauslassweg seitlich geschlossen ist; zum anderen kann das Griffelement jedoch auch im Wesentlichen parallel zu der Außenseite des Deckels angeordnet sein, so dass sich ein seitlich offener Dampfauslassweg ergibt. Auch Mischformen davon oder andere Formgestaltungen sind denkbar. Insgesamt ergibt sich durch die Verwendung des Griffelementes als Wandung für den Dampfauslassweg eine besonders vorteilhafte Ausbildung der Küchenmaschine, da keine separaten Dampfauslasskanäle oder ähnliches geschaffen werden müssen, sondern ohne weiteren Materialeinsatz einzig und allein das Griffelement verwendet werden kann, um in Verbindung mit der Außenseite des Deckels den Dampfauslassweg zu formen.

Darüber hinaus kommt es durch die Führung des Dampfes von dem Deckelrand weg, entlang der Außenseite des Deckels, gleichzeitig zu einer Dampfströmung, mit welcher die Außenseite des Deckels unmittelbar mit der Temperatur des austretenden Dampfes beaufschlagt wird. Die Erwärmung der Außenseite des Deckels durch den entlang des Dampfauslassweges strömenden Dampf ermöglicht eine vergleichsweise hohe Temperatur auch in solchen Bereichen des Gefäßes.

Die Heizung des aufheizbaren Gefäßes kann beispielsweise über ein zweites Gefäß erfolgen, an welchem das aufheizbare Gefäß so angeordnet ist, dass aus dem zweiten Gefäß aufsteigender Dampf durch an dem aufheizbaren Gefäß ausgebildete Öffnungen in das aufheizbare Gefäß eintreten kann. Bei dieser Art von übereinandergesetzten Gefäßen, bei welchen in dem zweiten Gefäß erzeugter Dampf nach oben in Richtung des aufheizbaren Gefäßes strömt und die in dem aufheizbaren Gefäß enthaltenen Speisen erwärmt, ist regelmäßig die Temperatur im Bodenbereich des aufheizbaren Gefäßes besonders hoch. Demzufolge werden die Speisen, welche dort angeordnet sind, regelmäßig stärker erhitzt als die in den übrigen Bereichen angeordneten Speisen. Dadurch, dass die Außenseite des Deckels nun durch den in dem Dampfauslassweg strömenden Dampf erhitzt wird, kann eine Temperaturerhöhung in dem Randbereich des Deckels erreicht werden, in dem der Dampf austritt, sodass es zu einer gleichmäßigeren Aufheizung der in dem aufheizbaren Gefäß angeordneten Speisen kommen kann.

Es ist vorgesehen, dass der Deckel mindestens eine Dampfaustrittsöffnung aufweist, welche dem Dampfauslassweg zugeordnet ist. Die in dem Deckel, insbesondere im Bereich des Deckelrandes, angeordnete Dampfaustrittsöffnung ermöglicht ein Ausströmen des Dampfes aus dem Gefäß in den Dampfauslassweg. Bei der Dampfaustrittsöffnung oder den Dampfaustrittsöffnungen kann es sich entweder um zu dem Deckelrand beabstandete Öffnungen handeln oder alternativ auch um Materialaussparungen (Einbuchtungen) an dem Deckelrand, welche bei der Anlage des Deckels an einer Seitenwandung des Gefäßes Öffnungen zwischen Deckel und Gefäß bereitstellen.

Die Erfindung schlägt vor, dass der Dampfauslassweg im Bereich eines Griffelementes angeordnet ist, welches im Wesentlichen in Richtung der Mitte des Deckels weisend an der Außenseite des Deckels, insbesondere an dem Deckelrand, angeordnet ist. Gemäß dieser Ausführungsform ist der Dampfauslassweg im Bereich eines Griffelementes angeordnet, wobei das Griffelement sowohl als den Dampf lenkendes als auch als den Dampf vor dem Nutzer abschirmendes Element genutzt werden kann. Das Griffelement ist vorteilhaft an der Außenseite des Deckelelementes angeordnet und erstreckt sich besonders vorteilhaft entlang der Außenseite des Deckels in Richtung der Mitte des Deckels, so dass das Griffelement besonders vorteilhaft von dem Deckelrand ausgehend in die Mitte des Deckels zeigt. Damit entspricht die Orientierung des Griffelementes im Wesentlichen der Orientierung des Dampfauslassweges. Die Anordnung des Dampfauslassweges entlang der Außenseite des Deckels kann bevorzugt im Wesentlichen parallel zu der Außenseite des Deckels erfolgen, so dass der Dampf mit im Wesentlichen konstantem Abstand zu der Außenseite des Deckels geführt wird.

Es kann vorgesehen sein, dass das Griffelement einen im Wesentlichen in Richtung der Mitte des Deckels weisenden Dampfauslassteil und einen im Wesentlichen von dem Gefäß wegweisenden Griffteil aufweist, wobei zwischen Dampfauslassteil und Griff teil eine Trennwandung angeordnet ist. Durch die Ausbildung eines Dampfauslassteils und eines Griffteils an dem Griffelement können bestimmte Bereiche des Griffelementes für die Handhabung des Deckels durch den Nutzer bzw. die Führung des heißen Dampfes vorgesehen sein. Durch die zwischen dem Dampfauslassteil und dem Griffteil angeordnete Trennwandung wird der Dampfauslassweg von dem durch den Nutzer angefassten Griffteil getrennt. Dadurch ist der den Dampfauslassweg begrenzende Dampfauslassteil des Griffelementes von dem Griffteil getrennt, so dass es nicht zu einer Überhitzung des Griffteils und somit zu einer Verbrühung des Nutzers kommen kann. Die zwischen Dampfauslassteil und Griffteil angeordnete Trennwandung sorgt zudem dafür, dass an dem Deckel herabfließendes Kondensat nicht in den von dem Nutzer ergreifbaren Griffteil fließt, sondern vielmehr zurück in das Gefäß. Besonders vorteilhaft ist das Griffelement T-förmig ausgebildet, wobei die Trennwandung im Wesentlichen orthogonal von der Außenseite des Deckels absteht und der Dampfauslassteil und der Griffteil des Griffelementes im Wesentlichen parallel zu der Außenseite angeordnet sind. Damit ergibt sich die gewünschte Erstreckung des Dampfauslassweges entlang der Außenseite des Deckels.

Vorteilhaft weist das Griffelement ein gering wärmeleitfähiges Material auf. Bevorzugt kann ein Material mit einer Wärmeleitfähigkeit kleiner als 3 W/(m· K), besonders bevorzugt ein Kunststoff, eingesetzt werden. Das Griffelement kann dabei als solches aus dem gering wärmeleitfähigen Material hergestellt sein oder eine Ummantelung aus einem solchen Material aufweisen. Insbesondere empfiehlt es sich, dass zumindest der Griffteil des Griffelementes ein gering wärmeleitfähiges Material aufweist. Die Wärmeleitfähigkeit des gering wärmeleitfähigen Materials ist vorzugsweise geringer als die Wärmeleitfähigkeit des Deckelmaterials bzw. des Materials, aus dem der Deckel gefertigt ist.

Zudem kann das Griffelement ein zu dem Deckel separates Bauteil sein. Beispielsweise kann das Griffelement an den Deckel angeklebt, angeschweißt, angeschraubt oder durch ähnliche Befestigungsmethoden mit dem Deckel verbunden sein. Bei der separaten Ausbildung von Griffelement und Deckel ist es besonders einfach möglich, unterschiedliche Materialien für das Griffelement und den Deckel zu verwenden.

Alternativ kann es jedoch auch vorgesehen sein, dass das Griffelement einteilig mit dem Deckel ausgebildet ist. Dabei kann der Deckel beispielsweise ein Kunststoff- oder Metallteil sein, an welchem das Griffelement bereits ausgeformt ist, so dass keine separaten Griffelemente an dem Deckel angebracht werden müssen. In dieser Ausgestaltung sind Griffelement und Deckel vorzugsweise aus demselben Material ausgebildet, so dass gegebenenfalls für den Griffteil des Griffelementes eine gering wärmeleitfähige Ummantelung erforderlich ist.

Der Deckel des Gefäßes kann beispielsweise aus einem vorzugsweise transparenten Kunststoff, beispielsweise Polycarbonat oder Styrol-Acrylnitril oder aus einem Metall, wie beispielsweise Edelstahl, gefertigt sein.

Darüber hinaus empfiehlt es sich, dass die Außenseite des Deckels, insbesondere im Bereich des Dampfauslassweges, einen Temperatursensor aufweist. Auf der Außenseite des Deckels, insbesondere im Bereich des Dampfauslassweges, ist die Temperatur erhöht sobald der Garvorgang der Speisen einsetzt bzw. die Außenseite des Deckels von dem Dampf überströmt wird. Der Fortgang des Garprozess kann somit durch einen Temperatursensor überwacht werden. Der Temperatursensor kann beispielsweise ein Digitalthermometer oder auch ein optischer Sensor sein. Sofern die Temperatursensoren beispielsweise eine Temperatur von 90°C bis 95°C detektieren, kann davon ausgegangen werden, dass es sich um ausströmenden heißen Dampf handelt, welcher den Beginn des Garvorgangs anzeigt.

Darüber hinaus kann es auch vorgesehen sein, dass die Außenseite des Deckels im Bereich des Dampfauslassweges ein das Entweichen von Dampf optisch anzeigendes Element aufweist. Der Beginn des Garvorgangs innerhalb des Gefäßes ist an Kondenswasserabscheidungen auf der Außenseite des Deckels erkennbar. Das Kondenswasser bildet sich bevorzugt im Bereich des Dampfauslassweges sobald Dampf austritt. Die Sichtbarkeit der Kondenswasserabscheidungen kann durch eine spezielle Oberflächenbehandlung des Materials des Deckels hervorgehoben werden. Hierzu eignen sich beispielsweise eine Mattierung, Polierung und/oder Verspiegelung der Außenseite des Deckels im Bereich des Dampfauslassweges. Bei einem geschlossenen Dampfauslassweg werden die das Entweichen von Dampf optisch anzeigenden Elemente bevorzugt an dem Ausgang des Dampfauslassweges angeordnet. Sofern es sich demgegenüber bei dem Dampfauslassweg um einen seitlich offenen Weg handelt, können die entsprechenden Elemente auch entlang des Dampfauslassweges auf dem Deckel angeordnet sein.

Es empfiehlt sich im Rahmen der Erfindung, dass das Gefäß ein Dampfgargefäß ist, wobei die Küchenmaschine des Weiteren ein Heizgefäß, insbesondere ein beheiztes Rührgefäß, aufweist, welches Heizgefäß eine zu dem Dampfgargefäß korrespondierende Abdeckung aufweist, an welcher das Dampfgargefäß so anordenbar ist, dass aus dem Heizgefäß aufsteigender Dampf durch an dem Dampfgargefäß ausgebildete Öffnungen in das Dampfgargefäß eintreten kann. Die Abdeckung ist vorteilhaft ringförmig ausgebildet, so dass sich innerhalb der Abdeckung mittig eine Öffnung ergibt, in welche das Dampfgargefäß eingesetzt werden kann. Das Dampfgargefäß weist auf seiner in Richtung des Heizgefäßes gerichteten Seite Öffnungen auf, durch welche aus dem Heizgefäß aufströmender Dampf in das Dampfgargefäß eintreten kann. Somit kann die in dem Heizgefäß entstehende Wärme, welche in dem aufsteigenden Dampf gespeichert ist, genutzt werden, um in dem Dampfgargefäß angeordnete Speisen zu garen.

Schließlich wird mit der Erfindung neben der zuvor dargestellten Küchenmaschine ebenfalls auch ein Verfahren zum Erhitzen von Speisen mittels einer Küchenmaschine vorgeschlagen, insbesondere mittels einer zuvor beschriebenen Küchenmaschine, wobei in einem Gefäß der Küchenmaschine strömender Dampf über mindestens einen im Bereich eines Deckelrandes angeordneten Dampfauslassweg in die Umgebung entweichen kann, und wobei der Dampf von dem Deckelrand ausgehend, an einer Außenseite des Deckels entlang, im Wesentlichen radial in Richtung der Mitte des Deckels geführt wird. Durch diese Verfahrensgestaltung wird der heiße Dampf zum einen radial nach innen, d.h. in Richtung der Deckelmitte, geleitet, so dass der Dampf von dem Deckelrand weggeleitet wird; zum anderen erfolgt durch die Führung des Dampfes über eine gewisse Strecke an der Außenseite des Deckels entlang eine Abkühlung des Dampfes und somit auch eine Erwärmung des Deckels, welche vorteilhaft den Garprozess der in dem Gefaß enthaltenen Speisen verkürzen kann.

Im Übrigen ergeben sich auch in Verbindung mit dem erfindungsgemäßen Verfahren die zuvor in Bezug auf die Küchenmaschine genannten Vorteile.

Im Folgenden wird die Erfindung anhand eines Ausführungsbeispiels näher erläutert. Es zeigen:
- Fig. 1: eine erfindungsgemäße Küchenmaschine in einer perspektivischen Ansicht,
- Fig. 2: die Küchenmaschine gemäß Figur 1 in einer Schnittdarstellung.

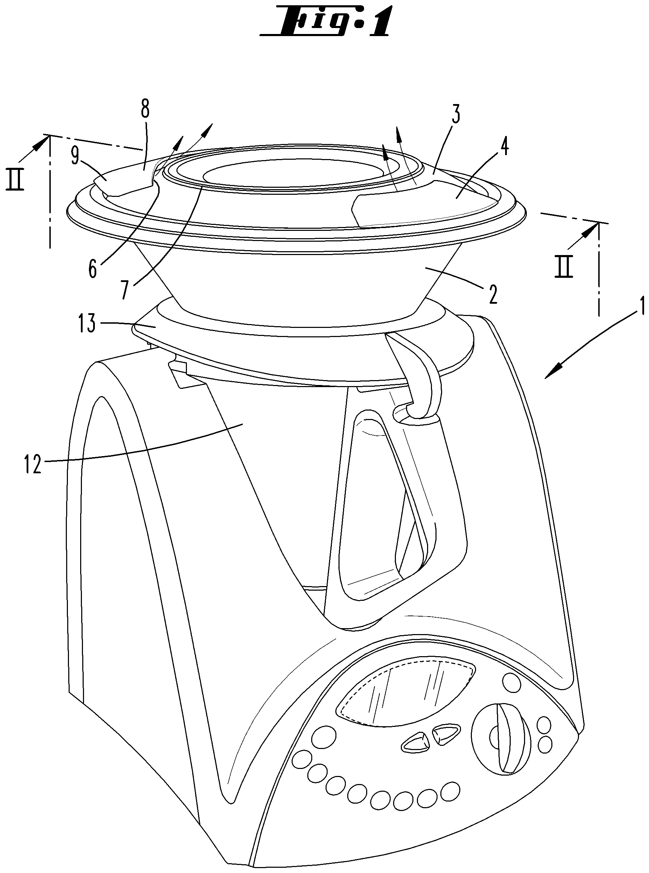

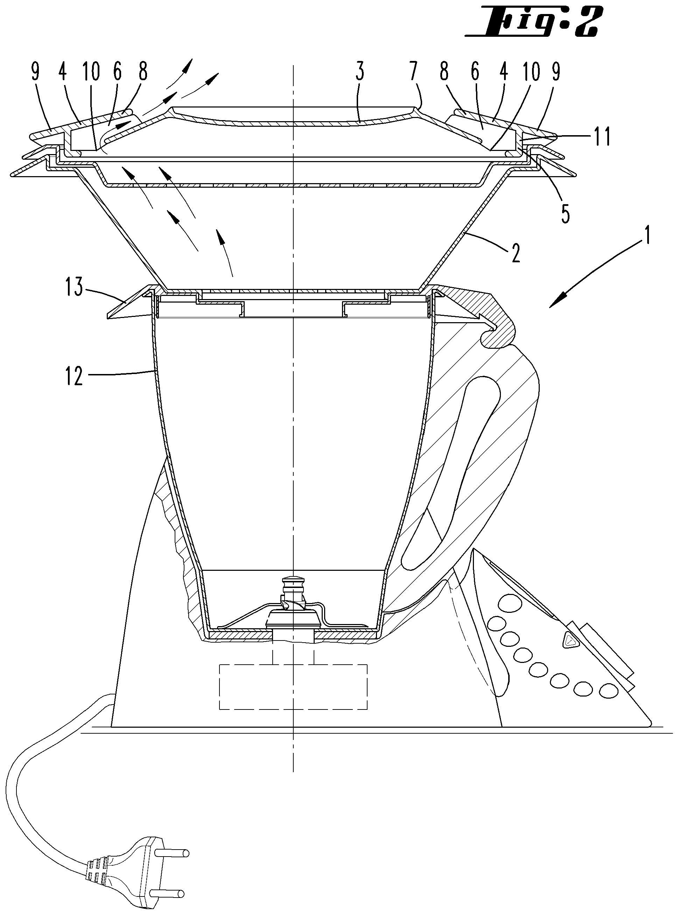

Die in den Figuren 1 und 2 gezeigte Küchenmaschine 1 weist beispielsweise ein Heizgefäß 12 auf, welches ein beheiztes Rührgefäß sein kann. Im Bereich der oberen Öffnung des Heizgefäßes 12 ist eine Abdeckung 13 angeordnet, welche eine zentrale Aussparung aufweist, so dass sich für die Abdeckung 13 im Wesentlichen eine Ringform ergibt. An der Abdeckung 13 ist ein Gefäß 2 angeordnet, welches beispielsweise ein Dampfgargefäß sein kann.

Das Gefäß 2 ist mit einem Deckel 3 verschlossen. Der Deckel 3 weist vorteilhaft im Bereich seines Deckelrandes 5 Griffelemente 4 auf. Die Griffelemente 4 sind T-förmig ausgebildet, wobei der "Balken" des "T" in einen Dampfauslassteil 8 und einen Griffteil 9 getrennt ist. Den Fuß des "T" bildet eine Trennwandung 11, welche zwischen dem Dampfauslassteil 8 und dem Griffteil 9 angeordnet ist und eine Verlängerung des Deckelrandes 5 bildet. Der Dampfauslassteil 8 des Griffelementes 4 ist in dem gezeigten Ausführungsbeispiel im Wesentlichen parallel zu der Außenseite 7 des Deckels 3 gerichtet, wobei der Dampfauslassteil 8 im Wesentlichen in Richtung der Mitte des Deckels 3 weist. Der Griffteil 9 des Griffelementes 4 weist im Wesentlichen von dem Gefäß 2 weg. Der Deckel 3 weist darüber hinaus im Bereich des Deckelrandes 5 Dampfaustrittsöffnungen 10 auf, welche in den Dampfauslassweg 6 münden.

Die exemplarisch gezeigte Küchenmaschine 1 funktioniert so, dass der Nutzer beispielsweise Wasser in das Heizgefäß 12 gibt. Alternativ können auch Speisen in das Heizgefäß 12 eingefüllt werden. In dem Falle, dass Wasser in das Heizgefäß 12 eingefüllt wird, soll das Heizgefäß 12 ausschließlich als Dampflieferant für das darüber angeordnete Gefäß 2 verwendet werden. An der oberen Öffnung des Heizgefäßes 12 wird eine Abdeckung 13 angeordnet, auf welche wiederum das Gefäß 2 gestellt wird. Das Gefäß 2 kann nun mit zu garenden Speisen befüllt werden, beispielsweise können diese Speisen unterschiedliche Gemüsesorten sein, welche einer Dampfgarung unterzogen werden sollen. Das Gefäß 2 wird mit dem Deckel 3 verschlossen. Hierzu kann der Nutzer die auf der Außenseite 7 des Deckels 3 angeordneten Griffelemente 4 anfassen.

Anschließend wird das Heizgefäß 12 aufgeheizt, so dass sich das darin befindliche Wasser erhitzt und sich Dampf bildet, welcher durch die Abdeckung 13 und durch an der Unterseite des Gefäßes 2 angeordnete Öffnungen in das Gefäß 2 eindringen kann. Der Dampf strömt innerhalb des Gefäßes 2 und erhitzt die darin befindlichen Speisen. Ebenso strömt der Dampf in Richtung der an dem Deckelrand 5 angeordneten Dampfaustrittsöffnungen 10, an welche sich der Dampfauslassweg 6 anschließt. Der Dampfauslassweg 6 ist zwischen der Außenseite 7 des Deckels 3 und den Griffelementen 4, insbesondere dem Dampfauslassteil 8 des Griffelementes 4, angeordnet. Durch die besondere Form der beiden an dem Deckel 3 angeordneten Griffelemente 4 strömt der Dampf im Wesentlichen von dem Deckelrand 5 an der Außenseite 7 des Deckels 3 entlang, und in Richtung der Mitte des Deckels 3. Der Dampfweg ist in den Figuren - insbesondere in Figur 2 - durch Pfeile angedeutet. Dabei wurde der Dampfweg für eine bessere Lesbarkeit der Bezugszeichen nur im Bereich eines Griffelementes 4 dargestellt. Selbstverständlich ergibt sich ein solcher Dampfweg jedoch auch im Bereich der weiteren Griffelemente 4.

Da die Griffelemente 4 gemäß der beispielhaften Ausführungsform sphärisch ausgebildet sind, stehen die Seitenbereiche der Griffelemente 4 in Kontakt mit der Außenseite 7 des Deckelelementes, so dass der Dampf im Wesentlichen nur in Richtung der Mitte des Deckels 3 geführt wird. Durch die Strömung des Dampfes innerhalb des Dampfauslassweges 6 von dem Deckelrand 5 in Richtung der Mitte des Deckels 3 wird die Außenseite 7 des Deckels 3 geheizt. Dadurch ergibt sich vorteilhaft eine Heizung des Gefäßes 2 über den Deckel 3, so dass die in dem Gefäß 2 befindlichen Speisen nicht nur von unten, d.h. durch den aus dem Heizgefäß 12 aufsteigenden Dampf erhitzt werden, sondern vielmehr auch von oben durch den erhitzten Deckel 3. Somit lässt sich auch in den von dem Heizgefäß 12 entfernteren Bereichen des Gefäßes 2, nämlich im Bereich des Deckelrandes 5, eine ausreichend hohe Temperatur für die Zubereitung der Speisen erzeugen.

Der aus dem Dampfauslassweg 6 hinausströmende Dampf kondensiert zumindest teilweise im Bereich der Austrittsöffnung des Dampfauslassweges 6. Dabei lässt sich von der Kondenswasserabscheidung auf das Einsetzen des Garvorgangs schließen. Vorteilhaft ist die Außenseite 7 des Deckels 3 zumindest im Bereich der Austrittsöffnung des Dampfauslassweges 6 poliert, mattiert, verspiegelt und/oder ähnliches, so dass sich dort abscheidendes Kondenswasser besonders einfach optisch erkennen lässt. Zusätzlich oder alternativ kann jedoch auf der Außenseite 7 des Deckels 3 auch ein Temperatursensor (in den Figuren nicht dargestellt) angeordnet sein, welcher die Temperatur des aus dem Dampfauslassweg 6 austretenden Dampfes misst. Sofern beispielsweise eine Temperatur zwischen 90°C und 95°C detektiert wird, kann auf den Beginn des Garvorgangs geschlossen werden.

Nach der abgeschlossenen Zubereitung der in dem Gefäß 2 enthaltenen Speisen kann der Nutzer den Deckel 3 mittels der an den Griffelementen 4 angeordneten Griffteile 9 von dem Gefäß 2 abheben. Da die Griffteile 9 durch die Trennwandung 11 von den Dampfauslassteilen 8 getrennt sind, weisen die Griffteile 9 lediglich Temperaturen auf, welche keine Gefahr für den Nutzer darstellen. Zudem sind die Griffelemente 4, beziehungsweise insbesondere die Griffteile 9, aus einem gering wärmeleitfähigen Material hergestellt oder mit einem solchen Material ummantelt, so dass sich keine wesentliche Erwärmung ergibt, wenn Dampf durch den Dampfauslassweg 6 strömt.

### Bezugszeichenliste:

- 1: Küchenmaschine
- 2: Gefäß
- 3: Deckel
- 4: Griffelement
- 5: Deckelrand
- 6: Dampfauslassweg
- 7: Außenseite
- 8: Dampfauslassteil
- 9: Griffteil
- 10: Dampfaustrittsöffnung
- 11: Trennwandung
- 12: Heizgefäß
- 13: Abdeckung

## Patentansprüche

1. Küchenmaschine (1) mit einem aufheizbaren Gefäß (2), wobei das Gefäß (2) einen Deckel (3) mit einem Deckelrand (5) aufweist, an welchem Deckel (3) mindestens ein Griffelement (4) angeordnet ist, wobei im Bereich des Deckelrandes (5) mindestens ein Dampfauslassweg (6) vorgegeben ist, über welchen in dem Gefäß (2) strömender Dampf in die Umgebung entweichen kann,
**dadurch gekennzeichnet,**
**dass** der Dampfauslassweg (6) von dem Deckelrand (5) ausgehend, an einer Außenseite (7) des Deckels (3) entlang, im Wesentlichen radial in Richtung der Mitte des Deckels (3) gerichtet ist, so dass aus dem Gefäß (2) entweichender Dampf an der Außenseite (7) des Deckels (3) entlanggeführt wird, wobei der Dampfauslassweg (6) zwischen der Außenseite (7) des Deckels (3) und einem Dampfauslassteil (8) des Griffelementes (4) ausgebildet ist, einerseits begrenzt durch das Griffteil und andererseits durch die Außenseite (7) des Deckels (3), so dass die Außenseite (7) unmittelbar mit der Temperatur des austretenden Dampfes beaufschlagt wird.

2. Küchenmaschine (1) nach Anspruch 1, **dadurch gekennzeichnet, dass** der Deckel (3) mindestens eine Dampfaustrittsöffnung (10) aufweist, welche dem Dampfauslassweg (6) zugeordnet ist.

3. Küchenmaschine (1) nach Anspruch 1 oder 2, **dadurch gekennzeichnet, dass** der Dampfauslassweg (6) im Bereich eines Griffelementes (4) angeordnet ist, welches im Wesentlichen in Richtung der Mitte des Deckels (3) weisend an der Außenseite (7) des Deckels (3), insbesondere an dem Deckelrand (5), angeordnet ist.

4. Küchenmaschine (1) nach einem der vorhergehenden Ansprüche, **dadurch gekennzeichnet, dass** das Griffelement (4) einen im Wesentlichen in Richtung der Mitte des Deckels (3) weisenden Dampfauslassteil (8) und einen im Wesentlichen von dem Gefäß (2) wegweisenden Griffteil (9) aufweist, wobei zwischen Dampfauslassteil (8) und Griffteil (9) eine Trennwandung (11) angeordnet ist.

5. Küchenmaschine (1) nach einem der vorhergehenden Ansprüche, **dadurch gekennzeichnet, dass** das Griffelement (4) ein gering wärmeleitfähiges Material, bevorzugt ein Material mit einer Wärmeleitfähigkeit kleiner als 3 W/(m·K), besonders bevorzugt einen Kunststoff, aufweist.

6. Küchenmaschine (1) nach einem der Ansprüche 1 bis 5, **dadurch gekennzeichnet, dass** das Griffelement (4) ein zu dem Deckel (3) separates Bauteil ist.

7. Küchenmaschine (1) nach einem der Ansprüche 1 bis 5, **dadurch gekennzeichnet, dass** das Griffelement (4) einteilig mit dem Deckel (3) ausgebildet ist.

8. Küchenmaschine (1) nach einem der vorhergehenden Ansprüche, **dadurch gekennzeichnet, dass** die Außenseite (7) des Deckels (3), insbesondere im Bereich des Dampfauslassweges (6), einen Temperatursensor aufweist.

9. Küchenmaschine (1) nach einem der vorhergehenden Ansprüche, **dadurch gekennzeichnet, dass** die Außenseite (7) des Deckels (3) im Bereich des Dampfauslassweges (6) ein das Entweichen von Dampf optisch anzeigendes Element aufweist.

10. Küchenmaschine (1) nach einem der vorhergehenden Ansprüche, **dadurch gekennzeichnet, dass** das Gefäß (2) ein Dampfgargefäß ist, wobei die Küchenmaschine (1) des Weiteren ein Heizgefäß (12), insbesondere ein beheiztes Rührgefäß, aufweist, welches Heizgefäß (12) eine zu dem Gefäß (2) korrespondierende Abdeckung (13) aufweist, an welcher das Gefäß (2) so anordenbar ist, dass aus dem Heizgefäß (12) aufsteigender Dampf durch an dem Gefäß (2) ausgebildete Öffnungen in das Gefäß (2) eintreten kann.

11. Verfahren zum Erhitzen von Speisen mittels einer Küchenmaschine (1), insbesondere mittels einer Küchenmaschine (1) nach einem der Ansprüche 1 bis 11, wobei in einem Gefäß (2) der Küchenmaschine (1) strömender Dampf über mindestens einen im Bereich eines Deckelrandes (5) angeordneten Dampfauslassweg (6) in die Umgebung entweichen kann, **dadurch gekennzeichnet,**
**dass** der Dampf von dem Deckelrand (5) ausgehend, an einer Außenseite (7) des Deckels (3) entlang, im Wesentlichen radial in Richtung der Mitte des Deckels (3) geführt wird, wobei der Dampfauslassweg (6) zwischen der Außenseite (7) des Deckels (3) und einem Dampfauslassteil (8) des Griffelementes (4) ausgebildet ist, so dass die Außenseite (7) des Deckels (3) unmittelbar mit der Temperatur des austretenden Dampfes beaufschlagt wird.

## Claims

1. Food processor (1) comprising a heatable vessel (2), the vessel (2) having a lid (3) that has a lid rim (5), on which lid (3) at least one grip element (4) is arranged, at least one steam outlet path (6) being defined in the region of the lid rim (5), via which path steam flowing in the vessel (2) can escape into the surroundings, **characterised in that** the steam outlet path (6), proceeding from the lid rim (5) along an outer side (7) of the lid (3), is oriented substantially radially towards the centre of the lid (3) such that steam escaping from the vessel (2) is guided along the outer side (7) of the lid (3), the steam outlet path (6) being formed between the outer side (7) of the lid (3) and a steam outlet part (8) of the grip element (4), delimited by the grip part on one side and the outer side (7) of the lid (3) on the other side, such that the outer side (7) is directly subjected to the temperature of the escaping steam.

2. Food processor (1) according to claim 1, **characterised in that** the lid (3) has at least one steam outlet opening (10) associated with the steam outlet path (6).

3. Food processor (1) according to either claim 1 or claim 2, **characterised in that** the steam outlet path (6) is arranged in the region of a grip element (4) that is arranged on the outer side (7) of the lid (3), in particular on the lid rim (5), so as to point substantially towards the centre of the lid (3).

4. Food processor (1) according to any of the preceding claims, **characterised in that** the grip element (4) has a steam outlet part (8) that points substantially towards the centre of the lid (3), and a grip part (9) that points substantially away from the vessel (2), a dividing wall (11) being arranged between the steam outlet part (8) and the grip part (9).

5. Food processor (1) according to any of the preceding claims, **characterised in that** the grip element (4) comprises a slightly thermally conductive material, preferably a material having a thermal conductivity of less than 3 W/(m·K), particularly preferably a plastics material.

6. Food processor (1) according to any of claims 1 to 5, **characterised in that** the grip element (4) is a separate component from the lid (3).

7. Food processor (1) according to any of claims 1 to 5, **characterised in that** the grip element (4) is integral with the lid (3).

8. Food processor (1) according to any of the preceding claims, **characterised in that** the outer side (7) of the lid (3), in particular in the region of the steam outlet path (6), has a temperature sensor.

9. Food processor (1) according to any of the preceding claims, **characterised in that** the outer side (7) of the lid (3), in the region of the steam outlet path (6), has an element that optically indicates the escape of steam.

10. Food processor (1) according to any of the preceding claims, **characterised in that** the vessel (2) is a steam-cooking vessel, the food processor (1) further having a heating vessel (12), in particular a heated stirring vessel, which heating vessel (12) has a cover (13) which corresponds to the vessel (2) and on which the vessel (2) can be arranged such that steam ascending out of the heating vessel (12) can enter the vessel (2) through openings formed in vessel (2).

11. Method for heating food by means of a food processor (1), in particular by means of a food processor (1) according any of claims 1 to 11, it being possible for steam flowing in a vessel (2) of the food processor (1) to escape into the surroundings via at least one steam outlet path (6) arranged in the region of a lid rim (5), **characterised in that** the steam, proceeding from the lid rim (5) along an outer side (7) of the lid (3), is guided substantially radially towards the centre of the lid (3), the steam outlet path (6) being formed between the outer side (7) of the lid (3) and a steam outlet part (8) of the grip element (4) such that the outer side (7) of the lid (3) is directly subjected to the temperature of the escaping steam.

## Revendications

1. Appareil de cuisine (1) comportant un récipient chauffable (2), dans lequel le récipient (2) comporte un couvercle (3) ayant un bord de couvercle (5), sur lequel couvercle (3) est agencé au moins un élément formant poignée (4), dans lequel au moins un chemin d'échappement de vapeur (6) est prédéfini dans la zone du bord de couvercle (5), par lequel la vapeur circulant dans le récipient (2) peut sortir dans l'environnement, **caractérisé en ce que**
le chemin d'échappement de vapeur (6) est dirigé sensiblement radialement en direction du centre du couvercle (3) le long d'un côté extérieur (7) du couvercle (3) à partir du bord de couvercle (5) de manière que de la vapeur s'échappant du récipient (2) soit guidée le long du côté extérieur (7) du couvercle (3), dans lequel le chemin d'échappement de vapeur (6) est formé entre le côté extérieur (7) du couvercle (3) et une partie d'échappement de vapeur (8) de l'élément formant poignée (4), délimitée, d'une part, par l'élément formant poignée et, d'autre part, par le côté extérieur (7) du couvercle (3) de manière que le côté extérieur (7) soit exposé directement à la température de la vapeur qui s'échappe.

2. Appareil de cuisine (1) selon la revendication 1, **caractérisé en ce que** le couvercle (3) présente au moins une ouverture d'échappement de vapeur (10) qui est associée au chemin d'échappement de vapeur (6).

3. Appareil de cuisine (1) selon la revendication 1 ou 2, **caractérisé en ce que** le chemin d'échappement de vapeur (6) est disposé dans la zone d'un élément formant poignée (4) qui est disposé sur la face extérieure (7) du couvercle (3), en particulier sur le bord de couvercle (5) en étant sensiblement orienté vers le centre du couvercle (3).

4. Appareil de cuisine (1) selon l'une des revendications précédentes, **caractérisé en ce que** l'élément formant poignée (4) présente une partie d'échappement de vapeur (8) orientée sensiblement vers le centre du couvercle (3) et une partie de poignée (9) orientée sensiblement à l'opposé du récipient (2), dans lequel une paroi de séparation (11) est disposée entre la partie d'échappement de vapeur (8) et la partie de poignée (9).

5. Appareil de cuisine (1) selon l'une des revendications précédentes, **caractérisé en ce que** l'élément formant poignée (4) comporte un matériau peu conducteur de chaleur, de préférence un matériau ayant une conductivité thermique inférieure à 3 W/(m.K), et de manière particulièrement préférée une matière plastique.

6. Machine de cuisine (1) selon l'une des revendications 1 à 5, **caractérisée en ce que** l'élément formant poignée (4) est un composant séparé du couvercle (3).

7. Appareil de cuisine (1) selon l'une des revendications 1 à 5, **caractérisé en ce que** l'élément formant poignée (4) est formé monobloc avec le couvercle (3).

8. Appareil de cuisine (1) selon l'une des revendications précédentes, **caractérisé en ce que** le côté extérieur (7) du couvercle (3) comporte un capteur de température, en particulier dans la zone du chemin d'échappement de vapeur (6).

9. Appareil de cuisine (1) selon l'une des revendications précédentes, **caractérisé en ce que** le côté extérieur (7) du couvercle (3) comporte dans la zone du chemin d'échappement de vapeur (6) un élément indiquant optiquement un échappement de vapeur.

10. Appareil de cuisine (1) selon l'une des revendications précédentes, **caractérisé en ce que** le récipient (2) est un récipient de cuisson à vapeur, dans lequel l'appareil de cuisine (1) comprend en outre un récipient de chauffage (12), en particulier un récipient d'agitation chauffé, lequel récipient de chauffage (12) comprend un couvercle (13) correspondant au récipient (2) et sur lequel le récipient (2) peut être agencé de telle manière que la vapeur montant du récipient de chauffage (12) peut entrer dans le récipient (2) par des ouvertures que présente le récipient (2).

11. Procédé de chauffage d'aliments au moyen d'un appareil de cuisine (1), en particulier d'un appareil de cuisine (1) selon l'une des revendications 1 à 11, dans lequel de la vapeur se circulant dans un récipient (2) de l'appareil de cuisine (1) peut s'échapper dans l'environnement par au moins un chemin de sortie de vapeur (6) disposé dans la région d'un bord du couvercle (5), **caractérisé en ce que**
la vapeur est guidée sensiblement radialement en direction du centre du couvercle (3) le long d'un côté extérieur (7) du couvercle (3) à partir du bord de couvercle (5), dans lequel le chemin d'échappement de vapeur (6) est formé entre le côté extérieur (7) du couvercle (3) et une partie d'échappement de vapeur (8) de l'élément formant poignée (4) de manière que le côté extérieur (7) soit exposé directement à la température de la vapeur qui s'échappe.
